# FASCICULE DE BREVET EUROPEEN

(11) **EP 2 370 281 B1**
(45) Date de publication et mention de la délivrance du brevet: **21.11.2012**
(21) Numéro de dépôt: 09802159.5
(22) Date de dépôt: 07.12.2009
(51) Int. Cl.: B60H 1/00

(54) **DISPOSITIF POUR REFROIDIR LES BATTERIES D'UN VÉHICULE NOTAMMENT ÉLECTRIQUE ET VÉHICULE EQUIPE D'UN TEL DISPOSITIF**
VORRICHTUNG ZUM KÜHLEN DER BATTERIEN EINES INSBESONDERE ELEKTRISCHEN FAHRZEUGS UND MIT SOLCH EINER VORRICHTUNG VERSEHENES FAHRZEUG
DEVICE FOR COOLING THE BATTERIES OF AN ESPECIALLY ELECTRIC VEHICLE AND VEHICLE PROVIDED WITH SUCH A DEVICE

(30) Priorité: 30.12.2008 FR 0859126
(43) Date de publication de la demande: 05.10.2011
(73) Titulaire: Renault S.A.S., 92100 Boulogne-Billancourt (FR)
(72) Inventeur: YU, Robert, 78180 Montigny Le Bretonneux (FR); ORIGUCHI, Masato, 78120 Rambouillet (FR); DUBIEF, Flavien, 2000 Neuchatel (CH)
(86) Numéro de dépôt international: PCT/FR2009/052423
(87) Numéro de publication internationale: WO 2010/076453

(56) Documents cités:
- US-A- 6 094 927
- US-A1- 2006 080 986
- US-A1- 2008 242 211

## Description

La présente invention concerne un dispositif pour refroidir la ou les batteries d'un véhicule automobile électrique, du type hybride ou tout électrique.

Les véhicules à moteur électrique sont alimentés en énergie électrique par une batterie dont la durée de vie est primordiale compte tenu de son prix initial.

Ces batteries électrochimiques, très sensibles aux variations de température, sont généralement conçues pour fonctionner de manière optimale dans une gamme de température de 20 à 40°C, voire de 20 à 30°C.

Une température supérieure à 40°C permet d'améliorer les performances d'une batterie au lithium mais augmente sa vitesse de dégradation, une température de 40°C étant déjà élevée pour assurer une longue durée de vie.

Une température supérieure à 40°C pour une batterie de type NiMH (ou NiCd) affecte la capacité de charge de la batterie.

En raison de leur taille et poids relativement importants (typiquement 15 à 20 kWh pour une batterie de 150 à 200 kg assurant une autonomie de 100 à 150 km), ces batteries montent lentement en température mais sont difficiles à refroidir.

La génération de chaleur étant proportionnelle au carré du courant électrique et la puissance étant proportionnelle au courant, la génération de chaleur est proportionnelle au carré de la puissance.

Une charge très rapide de la batterie (en une quinzaine de minutes) peut donc provoquer une génération de chaleur très importante dans la batterie.

Dans le cas d'un système de charge rapide de la batterie, le conducteur peut utiliser le véhicule plusieurs fois dans la même journée en chargeant rapidement la batterie après sa décharge complète suite à l'utilisation du véhicule.

Dans ce cas, la température de la batterie va augmenter de plus en plus jusqu'à atteindre la température autorisée maximale, la batterie n'ayant pas le temps de refroidir entre deux cycles de charge rapide de la batterie.

Il est alors nécessaire de refroidir la batterie afin de préserver sa durée de vie.

Le document US 5 834 132 propose un système de régulation de la température d'une batterie de véhicule automobile.

Ce système prévoit un circuit de refroidissement circulant entre les cellules de la batterie, ce circuit étant alimenté en fluide de refroidissement par un réservoir.

Une pompe est nécessaire pour assurer la circulation du fluide de refroidissement.

Le fluide est refroidi par l'air extérieur au moyen d'un radiateur et d'un ventilateur associé.

Toutefois, afin d'assurer un refroidissement efficace, les dimensions du radiateur et la capacité du ventilateur doivent être importantes, les différences de température entre l'air extérieur et le fluide et entre la batterie et le fluide étant relativement faibles.

Il en résulte un encombrement et un poids relativement important d'un tel système, qui de plus est complexe et coûteux en raison du circuit de refroidissement, de la pompe, du radiateur et du ventilateur de tailles importantes, des valves nécessaires.

En outre, un tel système n'est pas suffisamment efficace pour refroidir la batterie en cas de charges rapides successives en raison de la génération de chaleur très importante en un temps très court, et dans une température ambiante élevée (supérieure à 30°C).

Un autre dispositif de refroidissement connu utilise pour refroidir la ou les batteries, le système de climatisation du véhicule.

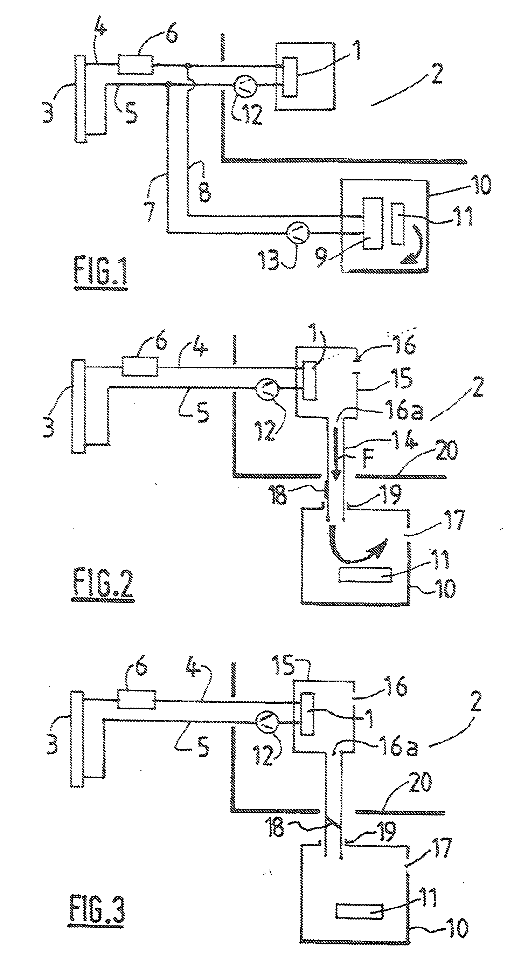

Ce dispositif équipe les véhicules du type Ford Escape et est schématisé sur la figure 1.

Ce dispositif comprend un évaporateur 1 situé dans l'habitacle 2 qui est relié au condenseur 3 situé à l'extérieur de l'habitacle par deux conduits 4, 5 dans lesquels circule un fluide frigorigène, tel que du fréon qui est comprimé dans un compresseur 6.

Les deux conduits 4, 5 sont reliés à deux conduits 7, 8 de dérivation qui sont reliés à un évaporateur 9 qui refroidit l'intérieur d'un bac 10 renfermant les batteries 11.

Les détenteurs 12, 13 permettent de régler la circulation du liquide frigorigène dans les conduits 4, 5 et 7, 8.

Ce dispositif de refroidissement nécessite ainsi un second évaporateur 9, ce qui le rend encombrant et coûteux à réaliser. Pour remédier aux inconvénients des dispositifs décrits ci-dessus, le document US 2006/0080986 divulgue un

dispositif pour refroidir la ou les batteries d'un véhicule automobile, en particulier d'un véhicule électrique, ce véhicule étant équipé d'un climatiseur qui comporte un évaporateur situé dans l'habitacle du véhicule et un condenseur situé à l'extérieur de cet habitacle, caractérisé en ce qu'il comprend un conduit d'air entre l'évaporateur et la ou les batteries adapté pour prélever une partie de l'air froid généré par l'évaporateur et l'envoyer vers la ou les batteries pour refroidir celle(s)-ci.

Ce dispositif de refroidissement est ainsi beaucoup moins complexe, coûteux et encombrant puisqu'il ne comprend ni conduits de dérivation pour le liquide frigorigène, ni second évaporateur pour refroidir les batteries. Le but de la présente invention est de faciliter la maintenance ou le remplacement des batteries d'un tel dispositif. Ce but est atteint par les caractéristiques de la revendication 1.

Suivant l'invention, l'évaporateur est situé dans une enceinte qui communique avec ledit conduit d'air et la ou les batteries est (sont) située(s) dans un bac dans lequel débouche ledit conduit.

L'air entourant les batteries est ainsi refroidi par l'air froid qui est envoyé dans le bac par la conduite d'air.

L'air froid produit par l'évaporateur de la climatisation du véhicule sert ainsi à la fois pour refroidir l'habitacle du véhicule et les batteries.

A cet effet, l'enceinte dans laquelle est situé l'évaporateur comprend une sortie d'air refroidi qui débouche dans l'habitacle et ledit bac comporte une sortie d'air qui débouche à l'air libre extérieur.

De préférence, ledit conduit comporte un volet mobile entre une position de fermeture et une position d'ouverture dudit conduit.

Le dispositif peut également comporter des moyens pour commander le déplacement du volet entre les deux positions précitées.

Ces moyens peuvent être manuels ou comporter un actionneur électrique qui commande le déplacement du volet en fonction de paramètres tels que la température extérieure, la température de la ou des batteries et la température de l'air circulant dans ledit conduit.

Suivant l'invention, le bac contenant la ou les batteries est raccordé à l'extrémité adjacente dudit conduit par un raccord permettant de détacher ledit bac dudit conduit.

On peut ainsi facilement détacher le bac contenant la ou les batteries pour assurer la maintenance de celle-ci ou pour les remplacer.

Dans un mode de réalisation, ledit bac est situé sous le plancher du véhicule et ledit conduit traverse ce plancher.

Selon un autre aspect, l'invention concerne également un véhicule automobile électrique équipé d'un dispositif pour refroidir les batteries selon l'invention.

D'autres particularités et avantages de l'invention apparaîtront encore tout au long de la description ci-après.

Aux dessins annexés, donnés à titre d'exemples, non limitatifs :
- la figure 2 est le schéma d'un dispositif de refroidissement des batteries d'un véhicule électrique selon l'invention, le refroidissement de ces batteries étant assuré par l'air froid généré par la climatisation du véhicule,
- la figure 3 est un schéma analogue à la figure 2, le refroidissement des batteries n'étant pas assuré.

Comme montré par la figure 2, le dispositif pour refroidir les batteries 11 d'un véhicule électrique équipé d'un climatiseur qui comporte comme dans le cas de la figure 1 un évaporateur 1 situé dans l'habitacle 2 du véhicule et un condenseur 3 situé à l'extérieur de cet habitacle comprend un conduit d'air 14 entre l'évaporateur 1 et les batteries 11 adapté pour prélever une partie de l'air froid généré par l'évaporateur 1 et l'envoyer (voir flèche F) vers les batteries 11 pour refroidir celles-ci.

L'évaporateur 1 est situé dans une enceinte 15 qui communique par une ouverture 16a avec le conduit d'air 14 et les batteries 11 sont situées dans un bac 10 dans lequel débouche le conduit 14.

La figure 2 montre en outre que l'enceinte 15 comprend une sortie 16 d'air refroidi qui débouche dans l'habitacle pour refroidir celui-ci et le bac 10 comporte une sortie d'air 17 qui débouche à l'air libre extérieur.

Par ailleurs, le conduit 14 comporte un volet 18 mobile entre une position de fermeture (voir figure 2) et une position d'ouverture (voir figure 3) du conduit 14.

De plus, des moyens sont prévus pour commander le déplacement du volet 18 entre les deux positions ci-dessus.

Cette commande peut être manuelle.

Les moyens de commande du volet 18 peuvent comporter un actionneur électrique (non représenté) qui peut commander le déplacement du volet 18 entre les deux positions en fonction de paramètres tels que la température extérieure, la température des batteries et la température de l'air circulant dans le conduit 14.

Le bac 10 contenant les batteries 11 peut être raccordé à l'extrémité adjacente du conduit 14 par un raccord 19 permettant de détacher le bac 10 du conduit 14 pour assurer la maintenance des batteries 11 ou remplacer celles-ci.

Dans l'exemple montré sur les figures 2 et 3, le bac 10 est situé sous le plancher 20 du véhicule et le conduit 14 traverse ce plancher 20.

On va maintenant expliquer en référence aux figures 2 et 3, le fonctionnement du dispositif de refroidissement que l'on vient de décrire.

Lorsque le volet 18 est ouvert, comme indiqué sur la figure 2, une partie de l'air froid généré par l'évaporateur 1 situé dans l'habitacle 2 pénètre dans le conduit 14 et vient refroidir les batteries 11 situées dans le bac 10.

Après avoir refroidi les batteries, l'air s'échappe par la sortie 17.

Ce mode de fonctionnement peut être utilisé, lors de la circulation du véhicule, pour éviter que les batteries 11 dépassent une température de l'ordre de 40°C.

Ce mode de fonctionnement peut être utilisé également, lors de la recharge des batteries, le véhicule étant immobile.

Dans ce cas, on fait tourner le moteur électrique du véhicule, au point mort, pour entraîner le compresseur 6 pour générer l'air froid dans l'enceinte 15 située dans l'habitacle et dans le bac des batteries 11.

Dans ce mode de fonctionnement, l'enceinte 15 peut être fermée pour que la totalité du débit d'air froid soit envoyé vers les batteries 11 afin de refroidir efficacement celles-ci.

Les batteries 11 peuvent ainsi être rechargées rapidement, sans risque d'échauffement de celles-ci.

Lorsque le volet 18 du conduit 14 est fermé, les batteries 11 ne sont pas refroidies.

Ce mode de fonctionnement peut être utilisé, lorsque la température extérieure est suffisamment basse.

Dans ce cas, il est en effet inutile de refroidir les batteries.

Les principaux avantages du dispositif de refroidissement des batteries sont les suivants :
- il ne nécessite pas d'évaporateur supplémentaire, ni de conduits de dérivation du liquide frigorigène,
- il nécessite simplement un conduit pour réaliser une communication entre l'enceinte de l'évaporateur situé dans l'habitacle et le bac des batteries,
- il est de ce fait, plus compact et moins coûteux à fabriquer que les dispositifs de refroidissement connus.

## Revendications

1. Dispositif pour refroidir la ou les batteries (11) d'un véhicule automobile, en particulier d'un véhicule électrique, ce véhicule étant équipé d'un climatiseur qui comporte un évaporateur (1) situé dans l'habitacle (2) du véhicule et un condenseur (3) situé à l'extérieur de cet habitacle, le dispositif comprenant un conduit d'air (14) entre l'évaporateur (1) et la ou les batteries (11) adapté pour prélever une partie de l'air froid généré par l'évaporateur (1) et l'envoyer vers la ou les batteries (11) pour refroidir celle(s)-ci, le dispositif étant **caractérisé en ce que** l'évaporateur (1) est situé dans une enceinte (15) qui communique avec ledit conduit d'air (14), la ou les batteries (11) étant située(s) dans un bac (10) dans lequel débouche ledit conduit (14), le bac (10) étant raccordé à l'extrémité adjacente dudit conduit (14) par un raccord (19) permettant de détacher ledit bac (10) dudit conduit (14).

2. Dispositif selon la revendication 1, **caractérisé en ce que** ladite enceinte (15) comprend une sortie (16) d'air refroidi qui débouche dans l'habitacle (2) et ledit bac (10) comporte une sortie d'air (17) qui débouche à l'air libre extérieur.

3. Dispositif selon l'une des revendications 1 ou 2, **caractérisé en ce que** ledit conduit (14) comporte un volet (18) mobile entre une position de fermeture et une position d'ouverture dudit conduit (14).

4. Dispositif selon la revendication 3, **caractérisé en ce qu'**il comporte des moyens pour commander le déplacement du volet (18) entre les deux positions.

5. Dispositif selon la revendication 4, **caractérisé en ce que** lesdits moyens comprennent un actionneur électrique qui commande le déplacement du volet (18) en fonction de paramètres tels que la température extérieure, la température de la ou des batteries et la température de l'air circulant dans ledit conduit (14).

6. Dispositif selon l'une des revendications 1 à 5, **caractérisé en ce que** ledit bac (10) est situé sous le plancher (20) du véhicule et ledit conduit (14) traverse ce plancher.

7. Véhicule automobile, notamment véhicule électrique équipé d'un dispositif selon l'une des revendications 1 à 6.

## Claims

1. Device for cooling the battery or batteries (11) of a motor vehicle, in particular of an electric vehicle, this vehicle being fitted with an air conditioner which comprises an evaporator (1) situated in the passenger compartment (2) of the vehicle and a condenser (3) situated outside this passenger compartment, the device comprising an air duct (14) between the evaporator (1) and the battery or batteries (11) which is capable of drawing off a portion of the cold air generated by the evaporator (1) and sending it to the battery or batteries (11) in order to cool the latter, the device being **characterized in that** the evaporator (1) is situated in an enclosure (15) which communicates with said air duct (14), the battery or batteries (11) being situated in a casing (10) into which said duct (14) opens, the casing (10) being connected to the adjacent end of said duct (14) by a connector (19) making it possible to detach said casing (10) from said duct (14).

2. Device according to Claim 1, **characterized in that** said enclosure (15) comprises a cooled-air outlet (16) which opens into the passenger compartment (2) and said casing (10) comprises an air outlet (17) which opens to the free outside air.

3. Device according to either of Claims 1 and 2, **characterized in that** said duct (14) comprises a flap (18) that can move between a closed position and an open position of said duct (14).

4. Device according to Claim 3, **characterized in that** it comprises means for controlling the movement of the flap (18) between the two positions.

5. Device according to Claim 4, **characterized in that** said means comprise an electric actuator which controls the movement of the flap (18) according to parameters such as the outside temperature, the temperature of the battery or batteries and the temperature of the air flowing in said duct (14).

6. Device according to one of Claims 1 to 5, **characterized in that** said casing (10) is situated beneath the floor (20) of the vehicle and said duct (14) passes through this floor.

7. Motor vehicle, notably an electric motor vehicle fitted with a device according to one of Claims 1 to 6.

## Patentansprüche

1. Vorrichtung zum Kühlen der Batterie oder der Batterien (11) eines Kraftfahrzeugs, insbesondere eines Elektrofahrzeugs, wobei dieses Fahrzeug mit einem Klimagerät ausgestattet ist, das einen Verdampfer (1), der sich im Innenraum (2) des Fahrzeugs befindet, und einen Kondensator (3) aufweist, der sich außerhalb dieses Innenraums befindet, wobei die Vorrichtung einen Luftkanal (14) zwischen dem Verdampfer (1) und der oder den Batterien (11) enthält, der geeignet ist, um einen Teil der vom Verdampfer (1) erzeugten Kaltluft zu entnehmen und zu der Batterie oder den Batterien (11) zu schicken, um diese zu kühlen, wobei die Vorrichtung **dadurch gekennzeichnet ist, dass** der Verdampfer (1) sich in einem Raum (15) befindet, der mit dem Luftkanal (14) in Verbindung steht, wobei die Batterie oder die Batterien (11) sich in einem Behälter (10) befindet oder befinden, in den der Kanal (14) mündet, wobei der Behälter (10) mit dem benachbarten Ende des Kanals (14) durch einen Anschluss (19) verbunden ist, der es ermöglicht, den Behälter (10) vom Kanal (14) zu lösen.

2. Vorrichtung nach Anspruch 1, **dadurch gekennzeichnet, dass** der Raum (15) einen Ausgang (16) gekühlter Luft aufweist, der in den Innenraum (2) mündet, und der Behälter (10) einen Luftausgang (17) aufweist, der in der freien Außenluft mündet.

3. Vorrichtung nach einem der Ansprüche 1 oder 2, **dadurch gekennzeichnet, dass** der Kanal (14) eine Klappe (18) aufweist, die zwischen einer Schließstellung und einer Öffnungsstellung des Kanals (14) beweglich ist.

4. Vorrichtung nach Anspruch 3, **dadurch gekennzeichnet, dass** sie Einrichtungen aufweist, um die Verschiebung der Klappe (18) zwischen den zwei Stellungen zu steuern.

5. Vorrichtung nach Anspruch 4, **dadurch gekennzeichnet, dass** die Einrichtungen ein elektrisches Stellglied enthalten, das die Verschiebung der Klappe (18) abhängig von Parametern wie der Außentemperatur, der Temperatur der Batterie oder der Batterien und der Temperatur der im Kanal (14) fließenden Luft steuert.

6. Vorrichtung nach einem der Ansprüche 1 bis 5, **dadurch gekennzeichnet, dass** der Behälter (10) sich unter dem Boden (20) des Fahrzeugs befindet und der Kanal (14) diesen Boden durchquert.

7. Kraftfahrzeug, insbesondere Elektrofahrzeug, das mit einer Vorrichtung nach einem der Ansprüche 1 bis 6 ausgestattet ist.
